(19) Europäisches Patentamt
European Patent Office
Office européen des brevets

(11) EP 0 696 758 B1

(12) EUROPÄISCHE PATENTSCHRIFT

(45) Veröffentlichungstag und Bekanntmachung des Hinweises auf die Patenterteilung:
**07.05.1997 Patentblatt 1997/19**

(51) Int Cl.[6]: **G03C 1/83**, C09B 29/36

(21) Anmeldenummer: **95111893.4**

(22) Anmeldetag: **28.07.1995**

(54) **Lichtempfindliches fotografisches Aufzeichnungsmaterial mit lichtabsorbierendem Farbstoff**

Light-sensitive photographique recording material containing a light absorbing dye

Matériau d'enregistrement sensible à la lumière contenant un colorant absorbant la lumière

(84) Benannte Vertragsstaaten:
**DE FR GB**

(30) Priorität: **10.08.1994 DE 4428292**

(43) Veröffentlichungstag der Anmeldung:
**14.02.1996 Patentblatt 1996/07**

(73) Patentinhaber: **Agfa-Gevaert AG**
**51373 Leverkusen (DE)**

(72) Erfinder:
- **Langen, Hans, Dr.**
  **D-53129 Bonn (DE)**
- **Öhlschläger, Hans, Dr.**
  **D-51467 Bergisch Gladbach (DE)**
- **Schütz, Heinz, Dipl.-Ing.**
  **D-51375 Leverkusen (DE)**

(56) Entgegenhaltungen:
**EP-A- 0 126 324** **DE-A- 2 347 590**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein lichtempfindliches fotografisches Aufzeichnungsmaterial mit wenigstens einer Silberhalogenidemulsionsschicht, das Azofarbstoffe enthält. Insbesondere betrifft die Erfindung ein fotografisches Material mit Zwischenschichten, die als gelbe Filterfarbstoffe Azofarbstoffe enthalten.

Es ist bekannt, lichtabsorbierende Farbstoffe in fotografische Aufzeichnungsmaterialien einzuarbeiten. Ein derartiger Farbstoff kann beispielsweise in einer nicht-lichtempfindlichen Schicht verwendet werden, die oberhalb einer lichtempfindlichen Silberhalogenidemulsionsschicht oder zwischen zwei lichtempfindlichen Emulsionsschichten angeordnet ist, um die darunter liegenden Emulsionsschichten vor der Wirkung von Licht der vom Farbstoff absorbierten Wellenlänge zu schützen. Weiterhin ist es bekannt, Farbstoffe als Schirmfarbstoffe in einer lichtempfindlichen Emulsionsschicht selbst oder als Lichthofschutzfarbstoffe in einer als Lichthofschutzschicht bekannten Schicht zu verwenden.

Wenn die spektrale Zusammensetzung des auf eine lichtempfindliche fotografische Silberhalogenidemulsionsschicht auffallenden Lichtes kontrolliert bzw. gesteuert werden muß, kann in dem lichtempfindlichen fotografischen Aufzeichnungsmaterial zu diesem Zwecke eine gefärbte Schicht eingebaut werden, die dann als Filterschicht bezeichnet wird. So wird z.B. in farbfotografischen Materialien meist eine gelb gefärbte Filterschicht zwischen der blauempfindlichen Gelbschicht und den darunter liegenden grünempfindlichen und rotempfindlichen Schichten angeordnet, um das blaue Licht von den grün- bzw. rotempfindlichen Schichten fern zu halten.

An die in fotografischen Materialien verwendeten Farbstoffe sind hohe Anforderungen zu stellen. Sie müssen nicht nur eine dem Verwendungszweck entsprechende geeignete spektrale Absorption aufweisen, sondern sollen weiterhin fotochemisch inert sein. Insbesondere dürfen die Farbstoffe keine nachteiligen Einflüsse auf die Qualität der fotografischen Silberhalogenidemulsion ausüben; sie dürfen somit z.B. nicht die Empfindlichkeit drücken oder eine Schleierbildung verursachen. Außerdem sollten die Farbstoffe im Material zwar diffusionsfest sein, müssen aber während der Verarbeitung des Materials vollständig und irreversibel entfärbt oder aus der Schicht ausgewaschen werden, so daß keinerlei unerwünschte Anfärbung auf dem belichteten und entwickelten fotografischen Material zurückbleibt.

Diese Anforderungen werden von den bekannten Farbstoffen nicht in befriedigendem Maße erfüllt. Das üblicherweise in Gelbfilterschichten verwendete kolloidale Silber führt leicht zu Schleierbildung in den benachbarten Emulsionsschichten. Organische Farbstoffe, die durch Einführung langer Alkylketten diffusionsfest gemacht werden, werden in normalen fotografischen Verarbeitungsbädern nicht oder nur unvollkommen entfärbt. Bei der Festlegung von Farbstoffen mit einer Beize reicht im allgemeinen die Beizwirkung nicht aus, um den Farbstoff im erforderlichen Umfange in der Beizschicht festzulegen.

Aus der deutschen Offenlegungsschrift 2 347 590 und der korrespondierenden Patentschrift DD 107 990 sind bereits bestimmte sulfonamidsubstituierte Azofarbstoffe bekannt, die insbesondere für Gelbfilterschichten geeignet sein sollen. Aber auch diese Farbstoffe erwiesen sich bezüglich der Diffusionsfestigkeit als unzureichend. Außerdem kristallisieren diese Farbstoffe im allgemeinen leicht aus Gelatinelösungen aus, was in der weiteren Verarbeitung zu Begußfehlern führt. Verwiesen sei in diesem Zusammenhang auf die Patentschrift DD 130 265, in der ebenfalls darauf hingewiesen wird, daß die aus der DD-PS 107 990 bekannten Azofarbstoffe zu unerwünschten Auskristallisationen neigen und unvertretbar hohe Restanfärbungen verursachen.

Der Erfindung liegt die Aufgabe zugrunde, Farbstoffe anzugeben, die in Lichthofschutzschichten oder Filterschichten und insbesondere in Gelbfilterschichten von fotografischen Aufzeichnungsmaterialien verwendet werden können. Diese Farbstoffe sollen die obigen Nachteile nicht aufweisen und insbesondere in Bezug auf Diffusionsfestigkeit, Auswaschbarkeit und Absorptionseigenschaften den Anforderungen der fotografischen Praxis genügen.

Gegenstand der Erfindung ist ein fotografisches Aufzeichnungsmaterial mit einem Schichtträger und mindestens einer darauf angeordneten lichtempfindlichen Silberhalogenidemulsionsschicht, das einen Azofarbstoff enthält, dadurch gekennzeichnet, daß der Azofarbstoff der folgenden allgemeinen Formel I entspricht:

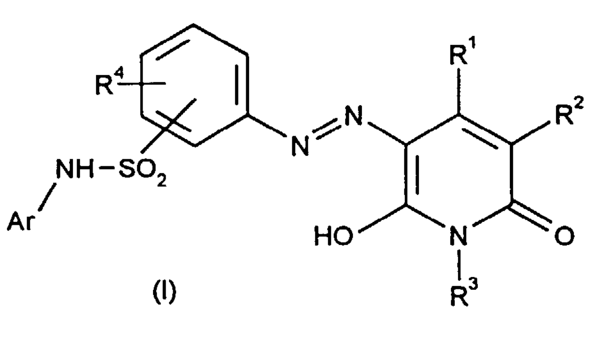

(I)

worin bedeuten:

$R^1$ H, Alkyl, Alkoxycarbonyl, Aryloxycarbonyl;

$R^2$ H, Alkyl, Aryl, -CN, Alkoxycarbonyl, Carbamoyl, Sulfamoyl;

$R^3$ H, Alkyl, Alkenyl, Cycloalkyl, Aryl oder einen heterocylischen Rest;

$R^4$ H, Halogen, Alkyl, Alkoxy, Alkoxycarbonyl, Sulfamoyl;

Ar Aryl.

Ein durch $R^1$, $R^2$, $R^3$, oder $R^4$ dargestellter Alkylrest ist geradkettig oder verzweigt, unsubstituiert oder substituiert und enthält bevorzugt 1 - 6 C-Atome. Beispiele sind Methyl, Ethyl, Isopropyl, Butyl, t-Butyl, Halogenalkyl, Methoxymethyl. Ein durch $R^1$, $R^2$ oder $R^4$ dargestellter Alkoxycarbonylrest enthält bevorzugt bis zu 4 C-Atome; Beipiele sind Methoxycarbonyl, Propoxycarbonyl. Ein durch R' dargestellter Aryloxycarbonylrest ist beispielsweise Phenoxycarbonyl.

Ein durch $R^2$ oder Ar dargestellter Arylrest ist vorzugseise Phenyl; die Phenylgruppe kann substituiert sein, z, B. mit Halogen wie Fluor Chlor oder Brom, Alkyl, Hydroxyalkyl, Halogenalkyl wie Trifluormethyl, Hydroxy, Alkoxy, Alkoxycarbonyl, Phenoxycarbonyl, Carbamoyl oder Sulfamoyl. Ein durch $R^2$ dargestellter oder als Substituent an einer Phenylgruppe vorhandener Sulfamoylrest kann am Stickstoffatom ein- oder zweifach substituiert sein, z.B. mit Alkyl oder Aryl.

Ein durch $R^3$ dargestellter Alkenylrest ist beispielsweise Allyl, ein Cycloalkylrest beispielsweise Cyclohexyl. Ein durch $R^3$ dargestellter heterocyclischer Rest ist beispielsweise 3-Sulfolanyl.

Ein durch $R^4$ dargestelltes Halogenatom ist beispielsweise Chlor oder Brom.Ein durch $R^4$ dargestellter Alkoxyrest ist beispielsweise Methoxy, Ethoxy.

Beispiele erfindungsgemäßer Farbstoffe sind im folgenden angegeben.

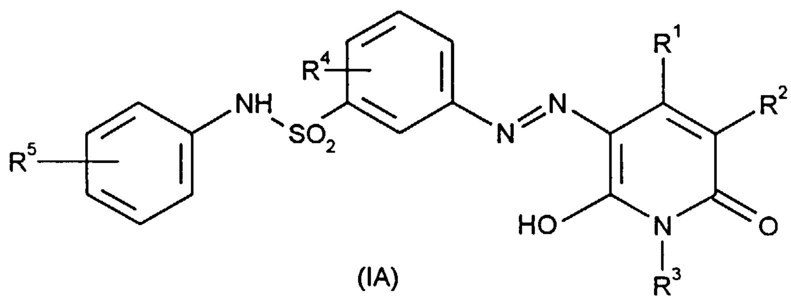

(IA)

| Farbstoff Nr. | $R^1$ | $R^2$ | $R^3$ | $R^4$ | $R^5$ |
|---|---|---|---|---|---|
| 1 | $-CH_3$ | -CN | H | H | H |
| 2 | $-CH_3$ | -CN | H | $4-CH_3$ | H |
| 3 | $-CH_3$ | -CN | $-CH_3$ | H | $2-COOC_2H_5$ |
| 4 | $-CH_3$ | $-CONH_2$ | H | H | $2-COOC_2H_5$ |
| 5 | $-CH_3$ | -CN | $-CH_3$ | H | $4-CH_3$ |

| Farbstoff Nr. | $R^1$ | $R^2$ | $R^3$ | $R^4$ | $R^5$ |
|---|---|---|---|---|---|
| 6 | $-CH_3$ | $-CONH_2$ | $-CH_3$ | H | $4-SO_2NH_2$ |
| 7 | $-CH_3$ | -CN | $-CH_3$ | $4-CH_3$ | H |
| 8 | $-CH_3$ | -CN | H | $4-CH_3$ | $4-CH_3$ |
| 9 | $-CH_3$ | -CN | H | H | $3,5-diCF_3$ |
| 10 | $-CH_3$ | -CN | $-CH_3$ | H | $4-COOCH_3$ |
| 11 | $-CH_3$ | -CN | 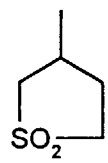 | H | $2,4-diCH_3$ |
| 12 | $-CH_3$ | -CN | H | H | H |
| 13 | $-CH_3$ | $-CONH_2$ | H | H | $4-OC_2H_5$ |
| 14 | $-COOCH_3$ | H | H | H | H |
| 15 | $-COOCH_3$ | H | H | H | $3-CHOHCH_3$ |
| 16 | $-COOCH_3$ | H | H | $4-CH_3$ | $4-C_2H_5$ |
| 17 | $-CH_3$ | $-CONH_2$ | H | H | $4-O(CH_2)_2OH$ |
| 18 | $-CH_3$ | -CN | $-CH_3$ | 4-Cl | $4-CH_3$ |
| 19 | $-CH_3$ | -CN | H | 2-Cl | $4-CH_3$ |
| 20 | $-CH_3$ | -CN | H | H | $3,5-diCH_3$ |
| 21 | $-CH_3$ | -CN | $-CH_3$ | $4-CH_3$ | $4-CH_3$, $3-OCH_3$ |

| Farbstoff Nr. | $R^1$ | $R^2$ | $R^3$ | $R^4$ | $R^5$ |
|---|---|---|---|---|---|
| 22 | $-CH_3$ | -CN | 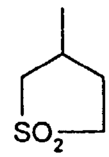 | $2-OCH_3$ | $4-CH_3$ |

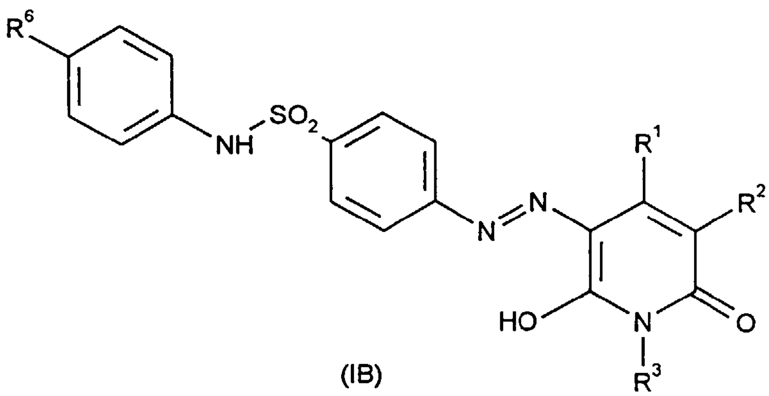

(IB)

| Farbstoff Nr. | $R^1$ | $R^2$ | $R^3$ | $R^6$ |
|---|---|---|---|---|
| 23 | $-CH_3$ | -CN | H | $-CH_3$ |
| 24 | $-CH_3$ | -CN | $-CH_3$ | $-CH_3$ |
| 25 | $-CH_3$ | -CN | H | $-SO_2NH_2$ |
| 26 | $-CH_3$ | -CN | $-CH_3$ | $-SO_2NH_2$ |
| 27 | $-CH_3$ | -CN | H | 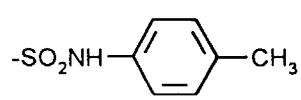 |
| 28 | $-CH_3$ | -CN | $-CH_3$ | 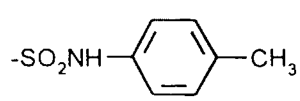 |

| Farbstoff Nr. | $R^1$ | $R^2$ | $R^3$ | $R^6$ |
|---|---|---|---|---|
| 29 | $-CH_3$ | $-CONH_2$ | H | $-CH_3$ |
| 30 | $-COOCH_3$ | H | H | $-CH_3$ |
| 31 | $-COOCH_3$ | H | $-CH_3$ | $-CH_3$ |
| 32 | $-CH_3$ | $-CONH_2$ | H | $-COOCH_3$ |
| 33 | $-CH_3$ | $-CONH_2$ | $-CH_3$ | $-COOCH_3$ |
| 34 | $-CH_3$ | -CN | 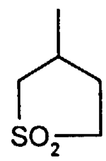 | $-CH_3$ |
| 35 | $-CH_3$ | -CN | 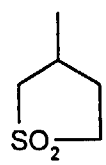 | $-SO_2NH_2$ |
| 36 | $-CH_3$ | -CN | H | $-C_4H_9$-t |
| 37 | $-CH_3$ | $-CONH_2$ | H | $-OC_2H_5$ |
| 38 | 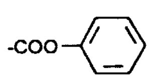 | H | $-CH_3$ | $-CH_3$ |

Die gemäß der Erfindung verwendeten Farbstoffe können leicht hergestellt werden durch Diazotierung der entsprechenden Amine und Kupplung mit geeigneten Pyridonen.

Beispielhaft wird nachfolgend die Herstellung von Farbstoff Nr. 28 beschrieben.

**Herstellung Farbstoff Nr. 28**

209 g N-Sulfanilyl-sulfanilsäure-p-toluidid werden in 930 ml Aceton gelöst und mit 165 ml konzentrierter Salzsäure versetzt, wobei die Temperatur bis 40°C steigt. Es wird auf 9 bis 5°C gekühlt und innerhalb 45 min eine Lösung von 52,7 g Natriumnitrit in 180 ml Wasser zugetropft. Die erhaltene Diazoniumsalzlösung wird 2h bei 0 bis 5°C nachgerührt und dann zu einer Suspension von 82 g 1,4-Dimethyl-5-hydroxy-3-cyanpyridon-2 in 880 ml Pyridin bei 10 bis 15°C zugetropft. Der Farbstoff beginnt nach kurzer Zeit auszufallen. Die Suspension wird noch 3 h bei Raumtemperatur nachgerührt, dann der Farbstoff abgesaugt und mit 500 ml Aceton gewaschen. Der Farbstoff wird noch mit 1,5 Wasser, dann mit 500 ml Aceton ausgerührt. Nach Trocknung im Vakuum bei 50°C erhält man 233 g Farbstoff mit Absorptionsmaximum 425 nm, E = 43.000 (in Methanol).

Die erfindungsgemäßen Farbstoffe werden in hydrophilen Bindemitteln, vorzugsweise in Gelatine eingesetzt. Die Farbstoffe können auf verschiedene Weise in eine Gelatineschicht eingebracht werden. Die Einbringmethode entscheidet weitgehend über die Form der Absorptionskurve und auf diese Weise kann die Farbstoffabsorption dem Verwendungszweck angepaßt werden.

So können die Farbstoffe nach der pH-Shift-Methode eingebracht werden, d.h. sie werden bei höherem pH-Wert in Wasser gelöst, Gelatine wird zugesetzt und anschließend wird der pH-Wert durch Zusatz von Säure abgesenkt. Beim Gieß-pH der Schichten, d.h. unterhalb pH 7, sind die Farbstoffe unlöslich in Wasser und deshalb in Gelatineschichten diffusionsfest, bei höherem pH-Wert (pH 8-11) werden die Farbstoffe löslich und deshalb während der Entwicklung völlig aus einem Material ausgewaschen. Die Farbstoffe können auch nach der Lösungsmittel-Shift-Methode eingebracht werden. Dazu werden die Farbstoffe in einem geeigneten organischen Lösungsmittel gelöst und dann das Lösungsmittel durch Wasser bzw. eine wäßrige Gelatinelösung ersetzt.

Die erfindungsgemäßen Farbstoffe können auch als Dispergate eingesetzt werden. Dispergate erhält man durch Fällungsreaktionen oder durch Mahlen der Farbstoffe in Sand- oder Kolloidmühlen. Die Dispergate sollen vorzugsweise einen mittleren Teilchendurchmesser von kleiner 1 µm haben.

Die Farbstoffe können allein oder in Kombination mit anderen Filterfarbstoffen, Maskenfarbstoffen, UV-Absorbern, Silberfiltergelb usw. eingesetzt werden. Sie werden dazu meist in getrennten Schichten eingearbeitet, jedoch können die Farbstoffe den Emulsionsschichten auch direkt zugesetzt werden. Die Einsatzmenge kann zwischen 1 und 1.000 $mg/m^2$ betragen, vorzugsweise 10 bis 200 $mg/m^2$.

Gemäß einer bevorzugten Ausführungsform der vorliegenden Erfindung werden die Farbstoffe der Formel I in einer Gelbfilterschicht verwendet, die vorzugsweise zwischen einer blauempfindlichen Schicht und den darunterliegenden grünempfindlichen bzw. rotempfindlichen Schichten eines fotografischen Aufzeichnungsmaterials angeordnet ist.

Die erfindungsgemäß verwendeten Farbstoffe weisen überraschenderweise eine hervorragende Diffusionsfestigkeit auf und lassen sich andererseits bei Behandlung mit alkalischen Lösungen, wie sie in der fotografischen Verarbeitung üblich sind, schnell und vollständig aus dem fotografischen Material entfernen.

Die vorliegende Erfindung ist für fotografische Materialien mit allen Silberhalogenidemulsionen geeignet. Diese können als Silberhalogenid Silberbromid, Silberchlorid oder Gemische davon, evtl. mit einem geringen Gehalt an Silberiodid bis zu 10 mol-%, enthalten.

Die fotografischen Materialien können mit üblichen Farbentwicklersubstanzen entwickelt werden, z.B. N,N-Dimethyl-p-phenylendiamin, 4-Amino-3-methyl-N-ethyl-N-methoxyethylanilin, 2-Amino-5-diethylaminotoluol, N-Butyl-N-ω-sulfobutyl-p-phenylendiamin, 2-Amino-5-(N-ethyl-N-β-methansulfonamidethyl-amino)-toluol, N-Ethyl-N-β-hydroxyethyl-p-phenylendiamin, N,N-Bis-(β-hydroxyethyl)-p-phenylendiamin, 2-Amino-5-(N-ethyl-N-β-hydroxyethylamino)-toluol. Weitere brauchbare Farbentwickler sind beispielsweise beschrieben in J. Amer. Chem. Soc. 73, 3100 (1951).

Das fotografische Material kann die üblichen Farbkuppler enthalten, die den Silberhalogenidschichten selbst einverleibt sein können. Beispielhaft für verwendbare Farbkuppler sei auf die Veröffentlichung "Farbkuppler" von W. PELZ in "Mitteilungen aus den Forschungslaboratorien der Agfa, Leverkusen/München", Band m (1961) und K. VENKATARAMAN in "The Chemistry of Synthetic Dyes", Vol. 4, 341 bis 387 Academic Press, 1971, hingewiesen.

Als weitere nicht diffundierende Farbkuppler können 2-Äquivalentkuppler, beispielsweise die bekanten DIR-Farbkuppler, verwendet werden. Die nicht diffundierenden Farbkuppler und farbgebenden Verbindungen können den lichtempfindlichen Silberhalogenidemulsionen oder sonstigen Gießlösungen nach üblichen bekannten Methoden zugesetzt werden.

Soweit es sich bei den nicht diffundierenden Farbkupplern und farbgebenden Verbindungen um wasser- bzw. alkaliunlösliche Verbindungen handelt, können sie in bekannter Weise emulgiert werden. Gegebenenfalls verwendet man zur Einemulgierung derartiger hydrophober Verbindungen zusätzlich noch sogenannte Kupplerlösungsmittel oder Ölbildner; verwiesen sei beispielsweise auf die US-Patentschriften 2 322 027, 2 533 514, 3 689 271, 3 764 336 und 3 765 897.

Als Bindemittel für die fotografischen Schichten wird vorzugsweise Gelatine verwendet. Diese kann jedoch ganz oder teilweise durch andere natürliche oder synthetische Bindemittel ersetzt werden.

Die Emulsionen können auch chemisch sensibilisiert werden, z.B. durch Zusatz schwefelhaltiger Verbindungen bei der chemischen Reifung, beispielsweise Allylisothiocyanat, Allylthioharnstoff und Natriumthiosulfat. Als chemische Sensibilisatoren können ferner auch Reduktionsmittel, z.B. die in den belgischen Patentschriften 493 464 oder 568 687, beschriebenen Zinnverbindungen, ferner Polyamine wie Diethylentriamin oder Aminomethylsulfinsäurederivate, z.B. gemäß der belgischen Patentschrift 547 323, verwendet werden. Geeignet als chemische Sensibilisatoren sind auch Edelmetalle bzw. Edelmetallverbindungen wie Gold, Platin, Palladium, Iridium, Ruthenium oder Rhodium. Es ist ferner möglich, die Emulsionen mit Polyalkylenoxidderivaten zu sensibilisieren, z.B. mit Polyethylenoxid eines Molekulargewichtes zwischen 1.000 und 20.000, ferner mit Kondensationsprodukten von Alkylenoxiden und Alkoholen, aliphatischen Carbonsäuren, aliphatischen Aminen, aliphatischen Diaminen und Amiden.

Die Emulsionen können auch optisch sensibilisiert sein, z.B. mit den üblichen Polymethinfarbstoffen, wie Neutrocyaninen, basischen oder sauren Carbocyaninen, Rhodacyaninen, Hemicyaninen, Styrylfarbstoffen, Oxonolen und ähnlichen. Derartige Sensibilisatoren sind in dem Werk von F.M. HAMER "The Cyanine Dyes an related Compounds", (1964), beschrieben.

Die Emulsionen können die üblichen Stabilisatoren enthalten, wie z.B. homöopolare oder salzartige Verbindungen des Quecksilbers mit aromatischen oder heterocyclischen Ringen wie Mercaptotriazole, einfache Quecksilbersalze, Sulfoniumquecksilberdoppelsalze und andere Quecksilberverbindungen. Als Stabilisatoren sind ferner geeignet Azaindene, vorzugsweise Tetra- oder Pentaazaindene, insbesondere solche, die mit Hydroxyl- oder Aminogruppen substituiert sind. Derartige Verbindungen sind z.B. in dem Artikel von BIRR, Z. Wiss. Phot. 47 (1952), 2 bis 58, beschrieben. Weitere geeignete Stabilisatoren sind u.a. heterocyclische Mercaptoverbindungen, z.B. Phenylmercaptotetrazol, quaternäre Benzthiazolderivate und Benzotriazol.

Die Schichten des fotografischen Materials können in der üblichen Weise gehärtet sein, beispielsweise mit Formaldehyd oder halogensubstituierten Aldehyden, die eine Carboxylgruppe enthalten, wie Mucobromsäure, Diketonen, Methansulfonsäureester, Dialdehyden und dergleichen. Weiterhin können die fotografischen Schichten mit Härtern des Epoxidtyps, des heterocyclischen Ethylenimins oder des Acryloyltyps gehärtet werden. Weiterhin ist es auch möglich, die Schichten gemäß dem Verfahren der deutschen Offenlegungsschrift 2 218 009 zu härten, um farbfotografische Materialien zu erzielen, die für eine Hochtemperaturverarbeitung geeignet sind. Es ist ferner möglich, die fotografischen Schichten bzw. die farbfotografischen Mehrschichtenmaterialien mit Härtern der Diazin-, Triazin- oder 1,2-Dihydrochinolin-Reihe zu härten. Beispiele derartiger Härter sind Alkyl- oder Arylsulfonylgruppen-haltige Diazinderivate, Derivate von hydrierten Diazinen oder Triazinen, wie z.B. 1,3,5-Hexahydrotriazin, Fluor-substituierte Diazinderivate, wie z.B. Fluorpyrimidin, Ester von 2-substituierten 1,2-Dihydrochinolin- oder 1,2-Dihydroisochinolin-N-carbonsäuren. Brauchbar sind weiterhin Vinylsulfonsäurehärter, Carbodiimid- oder Carbamoylhärter, wie z.B. in den deutschen Offenlegungsschriften 2 263 602, 2 225 230 und 1 808 685, der französischen Patentschrift 1 491 807, der deutschen Patentschrift 872 153 und der DDR-Patentschrift 7218, beschrieben. Weitere brauchbare Härter sind beispielsweise in der britischen Patentschrift 1 268 550 beschrieben.

**Beispiel 1**

Auf einen mit einer Haftschicht versehenen Cellulosetriacetatträger wurden folgende Schichten aufgetragen (Mengenangaben in g/m$^2$)

| | |
|---|---|
| Schicht 1 | |
| Farbstoff | 0,15 |
| Gelatine | 0,45 |
| Schicht 2 | |
| 1-(3-Sulfophenyl)-3-methyl-5-pyrazolonimid | 0,28 |
| Gelatine | 0,42 |
| Schicht 3 (Härtungsschicht) | |
| Härtungssmittel XH-1 | 0,32 |
| Gelatine | 0,5 |

Herstellung der Farbstofflösungen:

Je 3 g Farbstoff werden in 75 ml Wasser suspendiert und durch Zusatz von 20 ml 1 n Natronlauge gelöst, 90 ml 10 %ige wäßrige Gelatinelösung wurden zugesetzt und die Lösung mit Wasser auf 300 ml aufgefüllt.

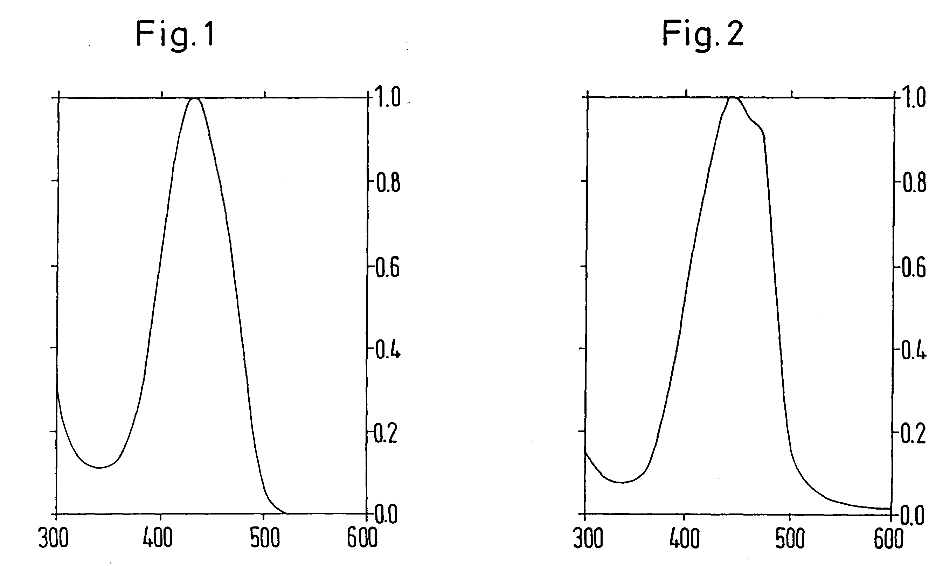

Man erhält völlig klare Farbstoffschichten, in denen der Farbstoff monomolekular gelöst ist. Die Absorption des Farbstoffs 28 zeigt Fig. 1.

Zur Beurteilung der Anwässerbarkeit der Farbstoffe aus den Schichten bei Entwicklung wurden die Schichten einerseits einer Behandlung nach einem Color-Negativ-Verfahren, das im British Journal of Photographie, 1974, Seiten 597 und 598, beschrieben ist und andererseits einem Color-Umkehr-Verfahren wie beschrieben in "Manual of Processing Kodak Ektachrome Film Using Process 7" (vgl. Kodak Publikation Nr. 7-119) unterworfen. Die Ergebnisse sind in Tabelle 1 zusammengestellt. $D_{Min}$ C41 und $D_{Min}$ E7 bedeuten die Restdichten nach Negativ-bzw. Umkehrentwicklung.

Zur Beurteilung der Diffusionsfestigkeit der Farbstoffe wurden die Farbstoffschichten 5 min in fließendem Wasser gewässert.

$$D\ Diff = \frac{D\ Frisch}{D\ Wäss.} \cdot 100\ \%$$

stellt ein Maß für die Diffusionsfestigkeit dar, wobei D Frisch die Dichte des unbehandelten Materials, D Wäss. die Dichte des Materials nach 5 min Wässerung bedeutet. Diese Werte sind ebenfalls in Tabelle 1 enthalten.

Tabelle 1

| Farbstoff Nr. | D Frisch | D C41 | D E7 | D Diff. |
|---|---|---|---|---|
| 2 | 0,85 | 0,02 | 0,01 | 96 |
| 5 | 0,77 | 0,08 | 0,04 | 101 |
| 7 | 0,88 | 0,06 | 0,02 | 103 |
| 8 | 0,83 | 0,09 | 0,03 | 100 |
| 14 | 0,81 | 0 | 0 | 97 |
| 23 | 0,88 | 0,01 | 0,01 | 98 |
| 24 | 0,87 | 0,08 | 0,01 | 98 |
| 25 | 0,76 | 0 | 0 | 98 |
| 26 | 0,84 | 0,01 | 0,01 | 96 |
| 28 | 0,72 | 0 | 0 | 102 |
| 29 | 0,72 | 0,02 | 0,01 | 100 |
| 31 | 0,68 | 0,01 | 0 | 99 |
| 34 | 0,57 | 0,01 | 0,01 | 96 |

Wird statt des 1-Sulfophenyl-3-methyl-pyrazolonimids eine andere anorganische, organische oder polymere Säure in der Schicht 2 eingesetzt, erhält man Schichten mit gleich guter Absorption und ähnlich guten Festlegungs- und Entfärbungseigenschaften.

**Beispiel 2**

3 g der Farbstoff Nr. 28 werden zusammen mit 100 g 2 %iger Gelatine und 2,14 g einer 28,4 %igen Lösung des Netzmittels Triton X200® (Röhm & Haas) in einer Mühle mit Zirkonoxidperlen mit 0,8 bis 1 mm Durchmesser 5 h lang gemahlen. Die Zirkonoxidperlen werden abgesaugt, die Farbstoffdispersion in 100 g 10 %ige Gelatine eingerührt und mit Wasser auf 300 g aufgefüllt. Das Farbstoffdispergat wird in einer Menge von 150 mg Farbstoff/$m^2$ auf einen Celluloseacetatträger aufgetragen und mit einer Härtungsschicht wie in Beispiel 1 überschichtet.

Die Absorption der Farbstoffschicht zeigt Fig. 2. Im Vergleich mit der Absorptionskurve in Fig. 1 sieht man deutlich, daß das Absorptionsmaximum bei der Dispersion langwellig verschoben ist (von 431 µm nach 440 µm) und daß bei der Dispersion eine zusätzliche, langwellig verschobene Absorptionsbande ausgebildet wird. Die Halbbandbreite steigt dadurch von 80 auf 88 µm.

Bei Behandlung im Color-Negativ-Prozess wurde die Farbstoffschicht mit dem dispergierten Farbstoff vollkommen entfärbt.

**Beispiel 3.1**

Ein mehrschichtiges farbfotografisches Aufzeichnungsmaterial wurde durch Beschichten eines substituierten Cellulosetriacetat-Films von 120 µm Dicke in der angegebenen Reihenfolge und Zusammensetzung hergestellt.

XC Cyankuppler
XM Magentakuppler
XY Gelbkuppler
XCM Cyankuppler, rot
XCY Cyankuppler, gelb
XMY Magentakuppler, gelb

| | |
|---|---|
| XDIR | DIR-Kuppler |
| XH | Härtungsmittel |
| XUV | UV-Absorber |
| XFF | Formalinträger |
| XW | Weißkuppler, Scavenger |
| XD | Farbstoff |

Die Mengen werden in $g/m^2$ angegeben, wobei im Fall der Silberhalogenidemulsionen das eingesetzte Silbernitrat zu Grunde gelegt wird. Die Emulsionen werden weiterhin durch den Halogenidanteil sowie durch den Volumenschwerpunkt (VSP) charakterisiert. Die Zuordnung einer Substanz zu einer Funktion dient lediglich der groben Charakterisierung, sie kann auch andere Effekte bewirken.

| **Schicht 1** | (Lichthofschutzschicht) | |
|---|---|---|
| | schwarzes kolloidales Silber | 0,25 |
| | Gelatine | 0,5 |

| **Schicht 2** | (niedrigempfindliche rotsensibilisierte Schicht) | |
|---|---|---|
| | Brom/Iod/Chlorid-Emulsion mit 4 % Iodid und 10 % Chlorid; (VSP = 0,5) | 1,9 |
| | XC-1 | 0,6 |
| | XCY-1 | $4x10^{-2}$ |
| | XCM-1 | $4x10^{-2}$ |
| | XDIR-1 | $10^{-2}$ |
| | Gelatine | 1,6 |

| **Schicht 3** | (mittelempfindliche rotsensibilisierte Schicht) | |
|---|---|---|
| | Brom/Iod-Emulsion mit 6 % Iodid (VSP = 1,2) | 2,0 |
| | XC-1 | 0,4 |
| | XCM-1 | $6x10^{-2}$ |
| | XCY-1 | $4x10^{-2}$ |
| | XDIR-1 | $10^{-2}$ |
| | Gelatine | 1,6 |

| **Schicht 4** | (hochempfindliche rotsensibilisierte Schicht) | |
|---|---|---|
| | Bromid/Iodid-Emulsion mit 10 % Iodid (VSP = 1,4) | 1,8 |
| | XC-2 | $8x10^{-2}$ |
| | Gelatine | 1,2 |

| **Schicht 5** | (Zwischenschicht) | |
|---|---|---|
| | XD-1 | 0,1 |
| | Gelatine | 1,0 |

| **Schicht 6** | (niedrigempfindliche grünsensibilisierte Schicht) | |
|---|---|---|
| | Bromid/Iodid/Chlorid-Emulsion mit 9 % $I^{\ominus}$ und 10 % $Cl^-$ (VPS = 0,5) | 1,4 |
| | XM-1 | 0,4 |
| | XMY-1 | $7x10^{-2}$ |
| | XDIR-1 | $2x10^{-2}$ |

(fortgesetzt)

| **Schicht 6** | (niedrigempfindliche grünsensibilisierte Schicht) | |
|---|---|---|
| | XW-1 | $4x10^{-3}$ |
| | XDIR-2 | $10^{-3}$ |
| | Gelatine | 1,4 |

| **Schicht 7** | (mittelempfindliche grünsensibilisierte Schicht) | |
|---|---|---|
| | Bromid/Iodid-Emulsion mit 4 % $I^-$ (VSP = 0,8) | 1,2 |
| | XM-1 | 0,2 |
| | XMY-1 | $2x10^{-2}$ |
| | XDIR-1 | $10^{-2}$ |
| | XW-1 | $2x10^{-3}$ |
| | Gelatine | 1,0 |
| | XDIR-2 | $10^{-3}$ |

| **Schicht 8** | (hochempfindliche grünsensibilisierte Schicht) | |
|---|---|---|
| | Bromid/Iod-Emulsion mit 12 % $I^-$ (VSP = 1,0) | 1,2 |
| | XM-2 | 0,2 |
| | XMY-2 | $2x10^{-2}$ |
| | XDIR-1 | $10^{-2}$ |
| | XW-2 | $3x10^{-3}$ |
| | Gelatine | 1,2 |

| **Schicht 9** | (Zwischenschicht) | |
|---|---|---|
| | XFF-1 | 0,4 |
| | Polyvinylpyrrolidon | $10^{-2}$ |
| | Gelatine | 0,4 |

| **Schicht 10** | (Gelbfilterschicht) | |
|---|---|---|
| | Kolloidales Silber | 0,1 |
| | XW-1 | $6x10^{-2}$ |
| | XFF-1 | 0,3 |
| | Gelatine | 0,4 |

| **Schicht 11** | (niedrigempfindliche blausensibilisierte Schicht) | |
|---|---|---|
| | Brom/Iodid/Chlorid-Emulsion mit 9 % $I^-$ u. 15 % $Cl^-$ (VSP = 1,0) | 0,7 |
| | Brom/Iodid/Chlorid-Emulsion mit 9,5 % $I^-$ u. 10,4 % $Cl^-$ (VSP = 0,5) | 0,3 |
| | XY-1 | 1,1 |
| | XDIR-1 | $4x10^{-2}$ |
| | Polyvinylpyrrolidon | 0,1 |
| | Gelatine | 2,0 |

| Schicht 12 | (mittelempfindliche blausensibilisierte Schicht) | |
|---|---|---|
| | Bromid/Iodid-Emulsion mit 12 % $I^-$ (VSP = 1,2) | 0,3 |
| | XY-1 | 0,1 |
| | XDIR-1 | $3x10^{-3}$ |
| | Gelatine | 0,4 |

| Schicht 13 | (hochempfindliche blausensibilisierte Schicht) | |
|---|---|---|
| | Bromid/Iodid-Emulsion mit 12 % $I^-$ (VSP = 1,4) | 0,5 |
| | XY-1 | 0,1 |
| | XDIR-1 | $2x10^{-3}$ |
| | Gelatine | 0,4 |

| Schicht 14 | (Schutzschicht) | |
|---|---|---|
| | Bromid-Mikrat-Emulsion mit 4 % $I^-$ (VSP = 0,05) | 0,3 |
| | XUV-1 | 0,2 |
| | XUV-2 | 0,3 |
| | Gelatine | 1,4 |

| Schicht 15 | (Härtungsschicht) | |
|---|---|---|
| | Persoftal | 0,04 |
| | XH-1 | 0,7 |
| | Gelatine | 0,2 |

In Beispiel 3.1 wurden folgende Verbindungen verwendet:

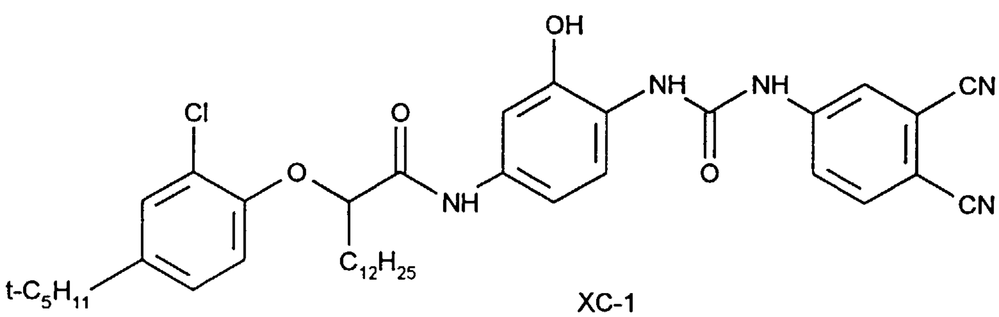

XC-1

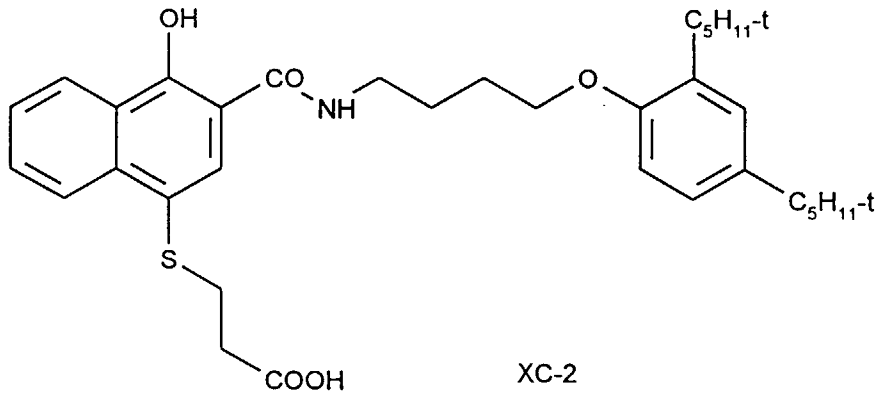

XC-2

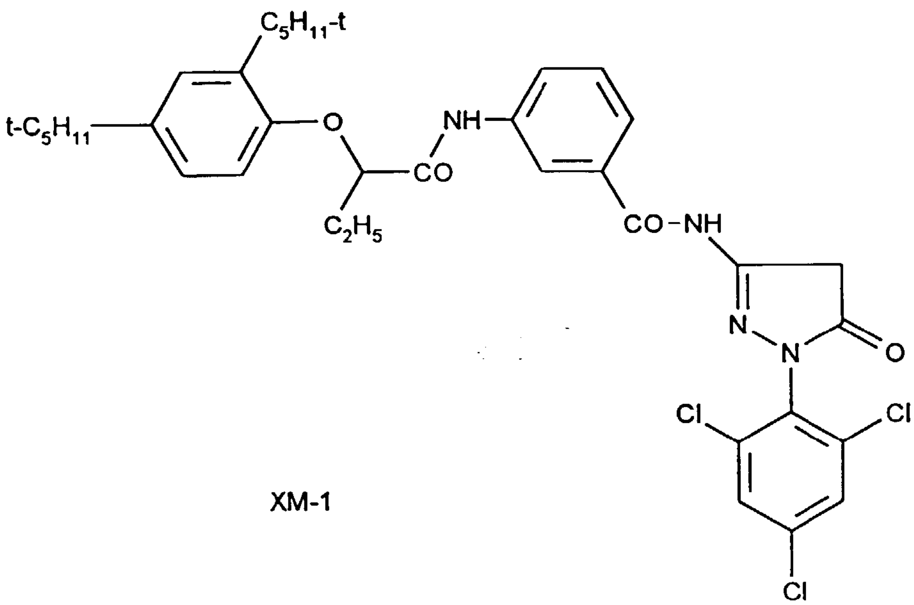

XM-1

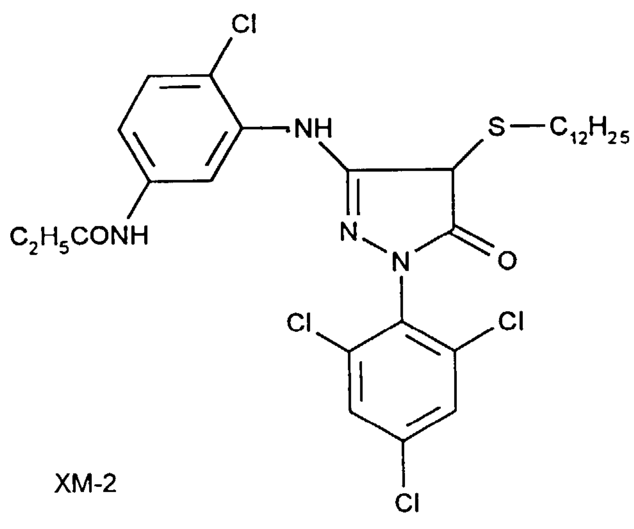

XM-2

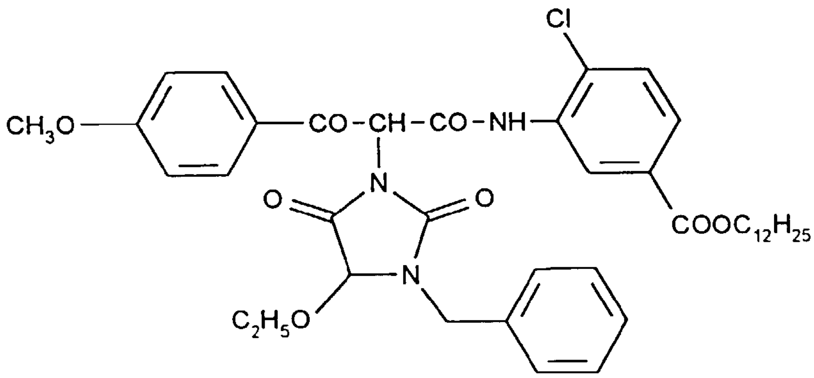

XY-1

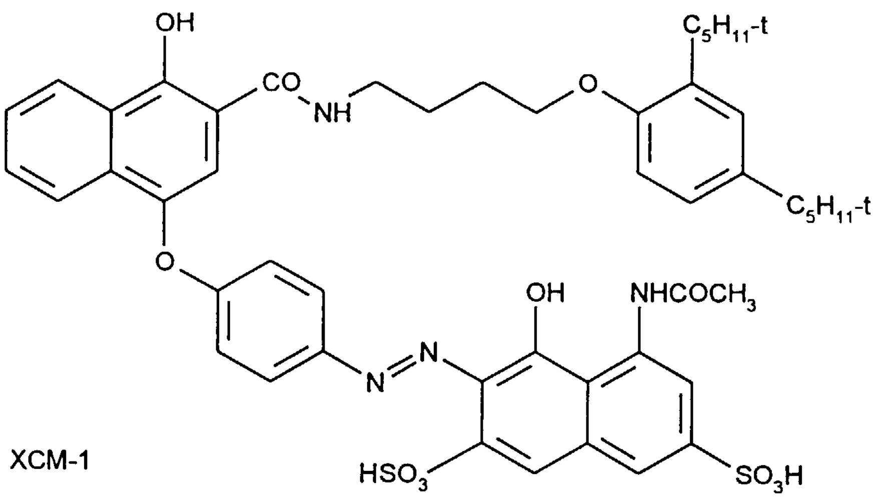

XCM-1

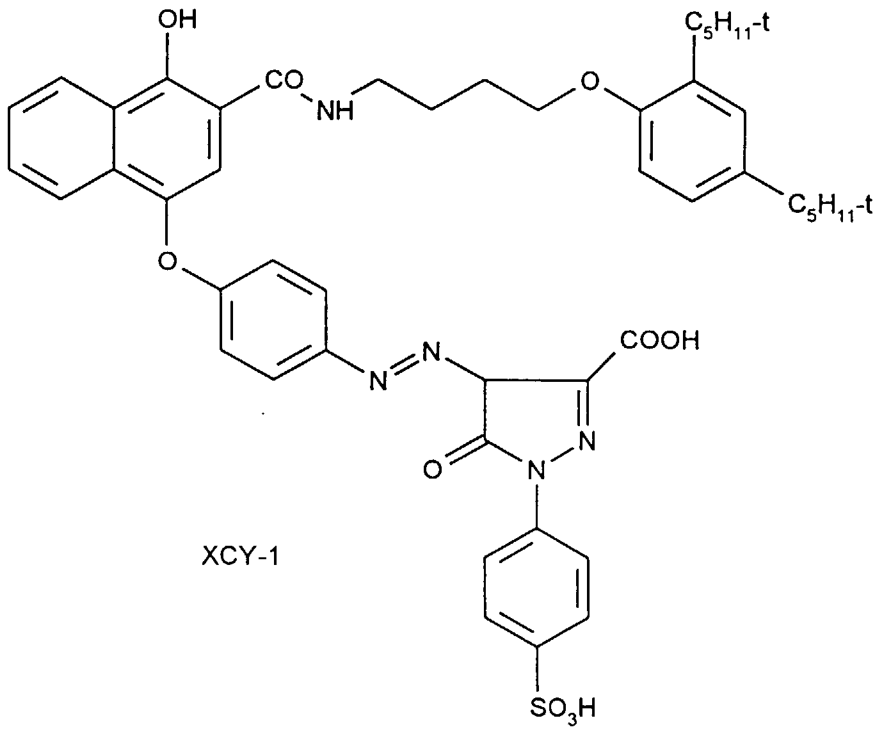

XCY-1

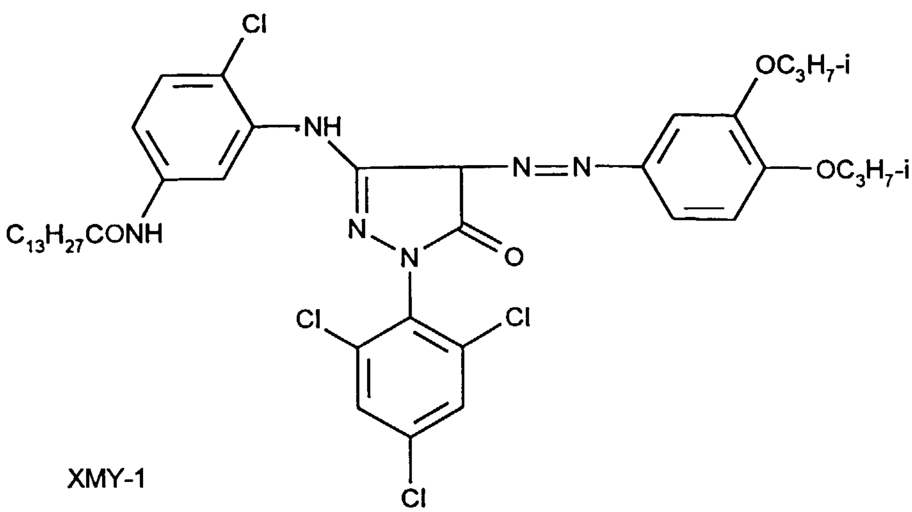

XMY-1

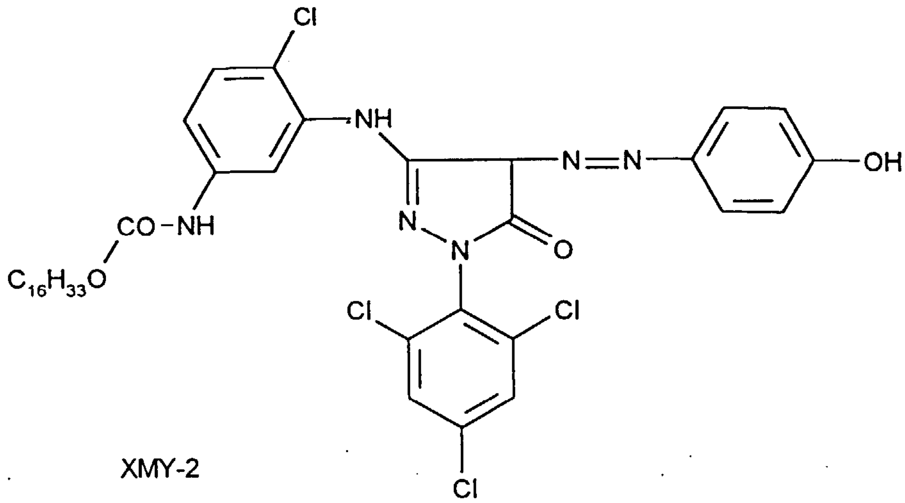

XMY-2

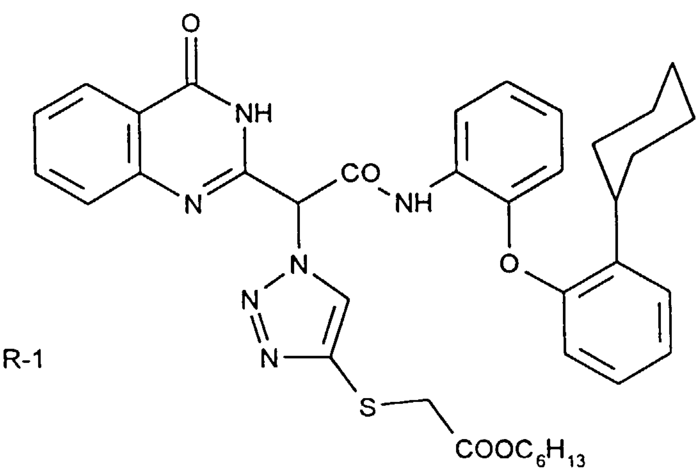

XDIR-1

XDIR-2

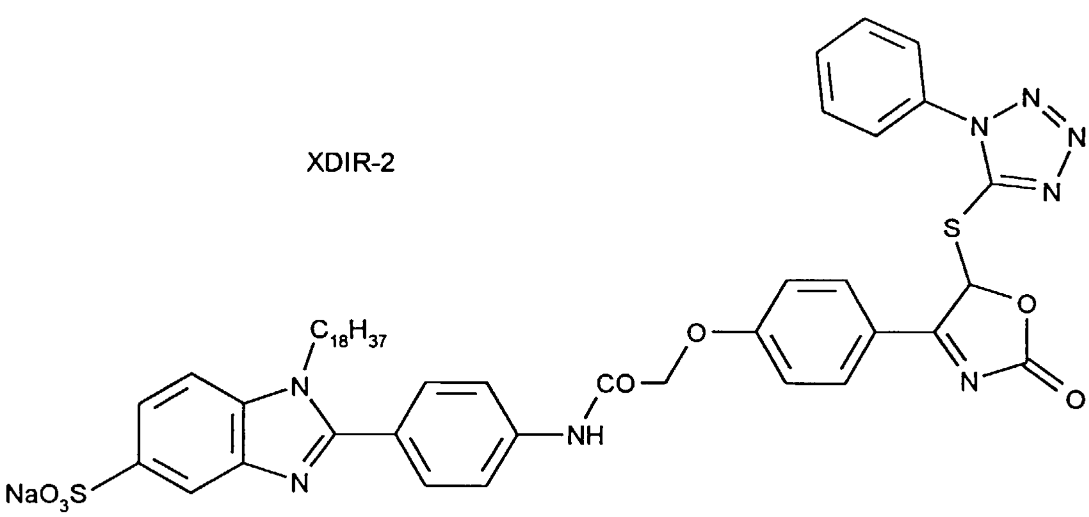

XW-1

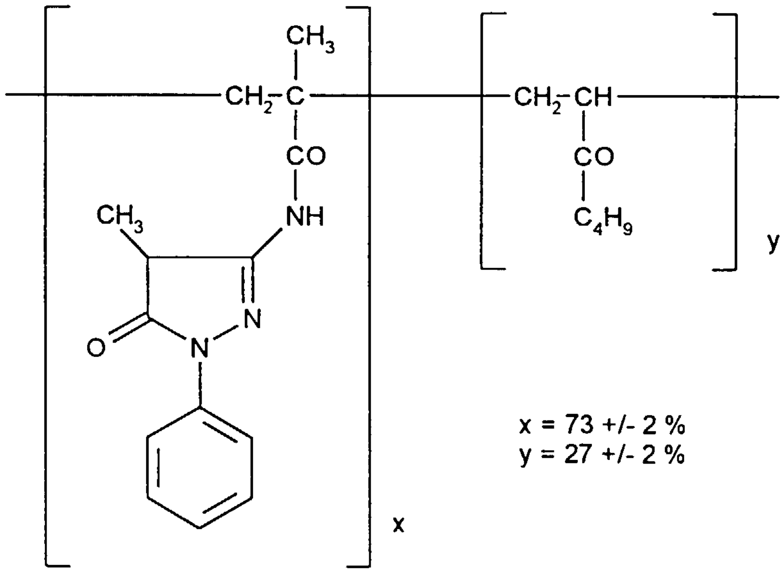

x = 73 +/- 2 %
y = 27 +/- 2 %

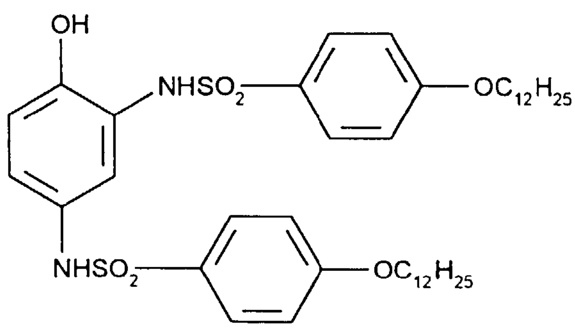

XW-2

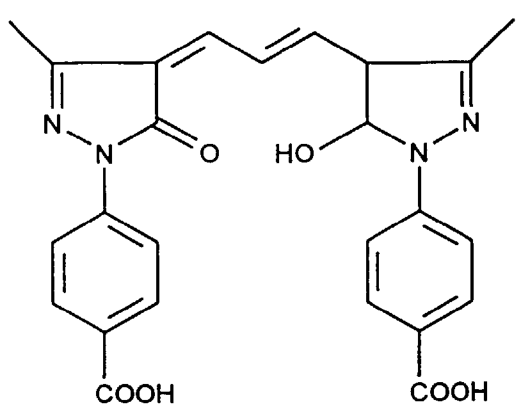

XD-1

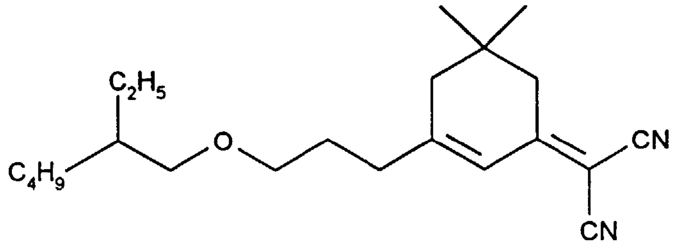

XUV-1

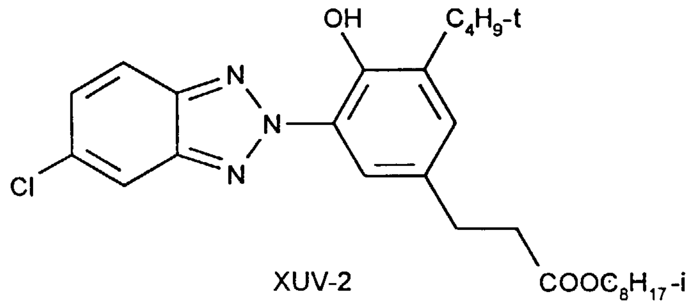

XUV-2

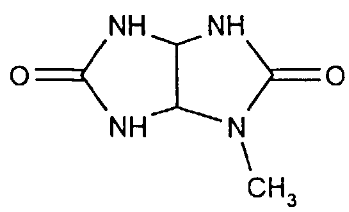

XFF-1

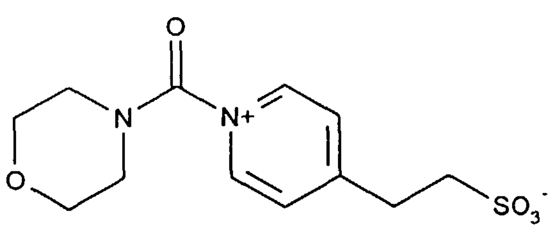

XH-1

Allgemeine Lösungsvorschrift für die erfindungsgemäßen Filterfarbstoffe:

75,0 g Filterfarbstoff werden in einen beheizbaren, mit Rührwerk versehenen Kessel überführt und mit 8,0 kg Wasser versetzt. Anschließend werden 0,3 kg 1n NaOH unter Rühren zugesetzt und danach 0,75 kg einer 10 %igen

Polyvinylpyrrolidon (Luviskol K30)-Lösung. Jetzt wird der Kesselinhalt unter intensivem Rühren auf 52°C erwärmt, und schließlich titrierend 1n NaOH bis zu einem konstanten pH = 10,2 zugegeben. Anschließend wird unter eventueller pH-Korrektur 0,5 h weiter gerührt. Sodann wird unter weiterer Rührung und Beibehaltung von 52°C zunächst schnell und unter pH = 8,5 langsam mit 1n $H_2SO_4$ titrierend ein pH von 7,8 eingestellt. Anschließend wird unter eventueller pH-Korrektur noch weiter 0,5 h gerührt. Schließlich wird mit Wasser auf 10 kg aufgefüllt, der pH nochmals überprüft, falls notwendig auf 7,8 korrigiert und auf Zimmertemperatur abgekühlt. Zum Schluß wird die erhaltene molekulare Lösung filtriert. Beim Umsetzen mit Gelatine konnten in der erhaltenen Gießlösung weder im Lichtmikroskop noch im Elektronenmikroskop dispergierte Teilchen nachgewiesen werden. Dies kann auch durch entsprechende Absorptionsmessungen nachgewiesen werden, die absolut frei von Aggregatbanden sind.

**Beispiele 3.2 bis 3.9**

Die Beispiele unterscheiden sich von Beispiel 3.1 dadurch, daß sie anstelle von Carey Lea Silber in Schicht 10 einen erfindungsgemäßen Filterfarbstoff enthielten. Zum Vergleich wurden auch die bereits bekannten Filterfarbstoffe CD-A aus US 4 923 788 und EP 549 489 sowie CD-B aus US 4 940 654 herangezogen.

Die verschiedenen Materialien wurden anschließend hinter einem graduierten Graukeil mit Tageslicht und hinter einem Blaufilter Status M belichtet. Danach wurden die Materialien nach dem bei E. CH. Gehret, The British J. of Photography 1974, S. 597 beschriebenen Prozeß verarbeitet. Aus den erhaltenen Proben lassen sich die relative Grünempfindlichkeit und die Blau/Grün-Farbtrennung entnehmen.

Es läßt sich deutlich erkennen, daß die erfindungsgemäßen Farbstoffe entweder eine höhere Empfindlichkeit oder bei gleicher Empfindlichkeit eine bessere Farbtrennung haben, was zu einer verbesserten Farbwiedergabe im Vergleich zum konventionellen Carey Lea Filter und zu den Vergleichsfarbstoffen im entwickelten Bild führt.

Aus der nachfolgenden Tabelle lassen sich die entsprechenden Kombinationen zusammen mit den erhaltenen Ergebnissen ersehen.

| Vers. Nr. | Farbstoff | Menge | rel. Grün-Empf. | Blau/Grün-Farbtrennung $\Delta$ log H |
|---|---|---|---|---|
| 3.1 | Car.L.-Ag | 0,10 g | 100 | 1,35 |
| 3.2 | Nr. 28 | 0,18 g | 135 | 1,35 |
| 3.3 | Nr. 28 | 0,36 g | 123 | 1,80 |
| 3.4 | Nr. 32 | 0,13 g | 128 | 1,30 |
| 3.5 | Nr. 32 | 0,27 g | 115 | 1,70 |
| 3.6 | Nr. 36 | 0,14 g | 132 | 1,35 |
| 3.7 | Nr. 36 | 0,28 g | 117 | 1,80 |
| 3.8 | Fst. A* | 0,17 g | 117 | 1,70 |
| 3.9 | Fst. B** | 0,20 g | 47 | $\geq$ 1,0 |

* Farbstoff A wurde durch die in US 4 940 654 beschriebene Methode dispergiert (auch in US 4923788).

** Farbstoff B wurde in Trikresylphosphat nach der in US 4 764 455 beschriebenen Methode emulgiert.

**Vergleichsfarbstoffe:**

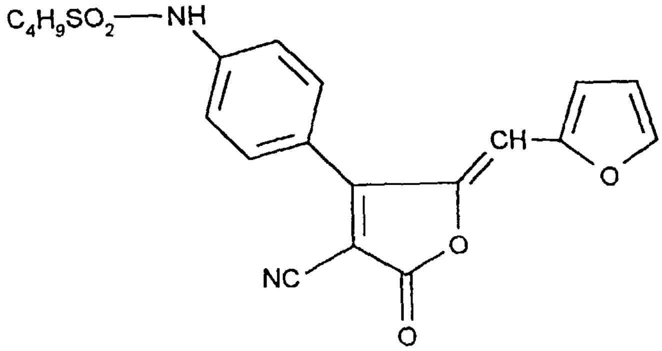

CD-A

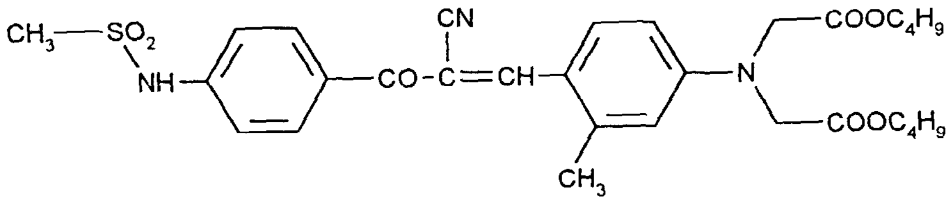

CD-B

## Patentansprüche

1. Fotografisches Aufzeichnungsmaterial mit einem Schichtträger und mindestens einer darauf angeordneten lichtempfindlichen Silberhalogenidemulsionsschicht, das einen Azofarbstoff enthält, dadurch gekennzeichnet, daß der Azofarbstoff der folgenden allgemeinen Formel I entspricht::

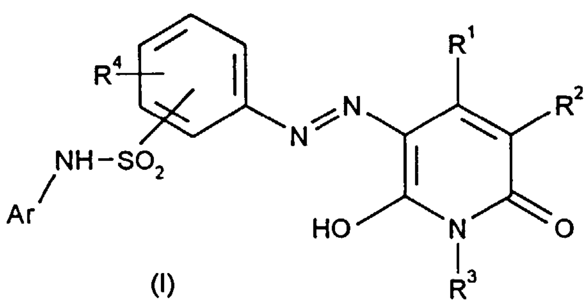

(I)

worin bedeuten:

$R^1$ H, Alkyl, Alkoxycarbonyl, Aryloxycarbonyl;

$R^2$ H, Alkyl, Aryl, -CN, Alkoxycarbonyl, Carbamoyl, Sulfamoyl;

$R^3$ H, Alkyl, Alkenyl, Cycloalkyl, Aryl oder einen heterocylischen Rest;

$R^4$ H, Halogen, Alkyl, Alkoxy, Alkoxycarbonyl, Sulfamoyl;

Ar Aryl.

**Claims**

1. Photographic recording material having a film support and, arranged thereon, at least one photosensitive silver halide emulsion layer which contains an azo dye, characterised in that the azo dye is of the following general formula I:

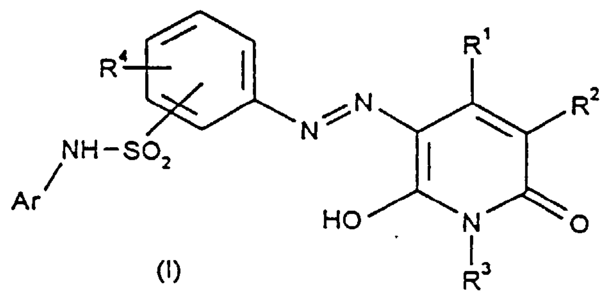

(I)

in which:

$R^1$ means H, alkyl, alkoxycarbonyl, aryloxycarbonyl;

$R^2$ means H, alkyl, aryl, -CN, alkoxycarbonyl, carbamoyl, sulphamoyl;

$R^3$ means H, alkyl, alkenyl, cycloalkyl, aryl or a heterocyclic residue;

$R^4$ means H, halogen, alkyl, alkoxy, alkoxycarbonyl, sulphamoyl;

Ar means aryl.

**Revendications**

1. Matériau d'enregistrement photographique comportant un support de couches et au moins une couche d'émulsion aux halogénures d'argent sensible à la lumière disposée sur celui-ci, qui contient un colorant azoïque, caractérisé en ce que le colorant azoïque correspond à la formule générale I suivante :

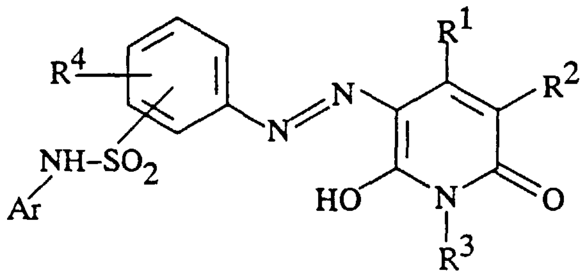

(I)

dans laquelle

$R^1$ représente H, alkyle, alcoxycarbonyle, aryloxycarbonyle ;
$R^2$ représente H, alkyle, aryle, -CN, alcoxycarbonyle, carbamoyle, sulfamoyle ;

$R^3$ représente H, alkyle, alcényle, cycloalkyle, aryle ou un reste hétérocyclique ;
$R^4$ représente H, halogène, alkyle, alcoxy, alcoxycarbonyle, sulfamoyle ;
Ar représente aryle.

Fig. 1

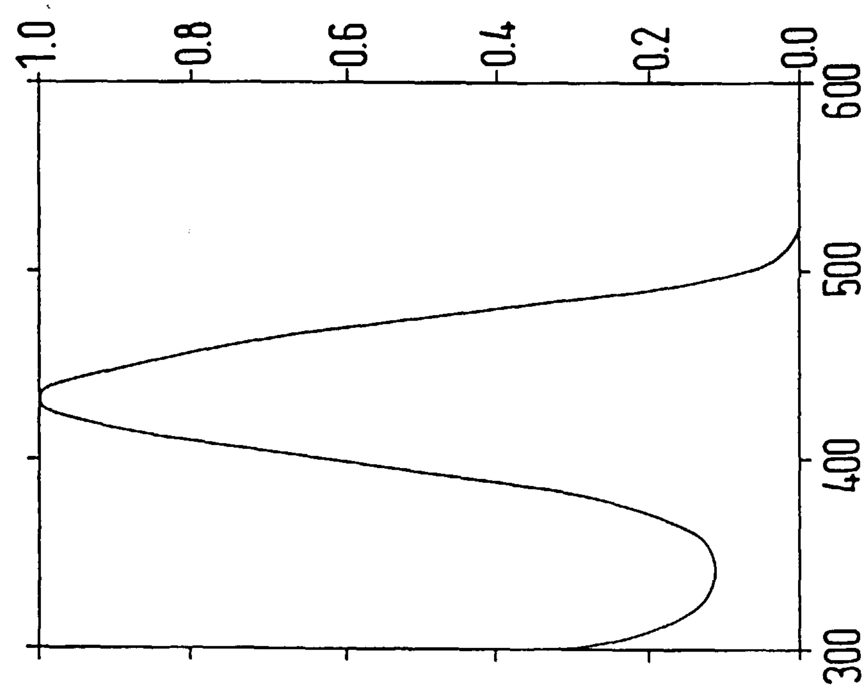


Fig. 2